# EUROPEAN PATENT SPECIFICATION

(11) **EP 0 845 824 B1**
(45) Date of publication and mention of the grant of the patent: **15.11.2006**
(21) Application number: 97120748.5
(22) Date of filing: 26.11.1997
(51) Int. Cl.: H01M 4/52, H01M 10/40

(54) **Lithium secondary battery and cathode active material for use in lithium secondary battery**
Lithium Sekundärbatterie und aktives Kathodenmaterial zur Verwendung in einer Lithium Sekündärbatterie
Pile secondaire au lithium et materiau actif cathodique pour pile secondaire au lithium

(30) Priority: 28.11.1996 JP 31827896
(43) Date of publication of application: 03.06.1998
(73) Proprietor: Sumitomo Chemical Company, Limited, Tokyo 104-8260 (JP)
(72) Inventor: Nakane, Kenji, Tsukuba-shi, Ibaraki (JP); Nishida, Yasunori, Tsukuba-shi, Ibaraki (JP); Kami, Kenichiro, Kariya-shi, Aichi (JP)
(74) Representative: Vossius & Partner

(56) References cited:
- EP-A- 0 744 780
- EP-A- 0 782 206
- EP-A- 0 806 397
- WO-A-97/49136

## Description

The present invention relates to a lithium secondary battery comprising a cathode including, as an active material, a material that can be doped/undoped with lithium ions, an anode including, as an active material, a lithium metal, a lithium alloy or a material that can be doped/undoped with lithium ions, and a liquid or solid electrolyte, and to the cathode active material for use in the lithium secondary battery.

An increasing demand exists for a lithium secondary battery smaller in size and weight and larger in capacity than the conventional secondary batteries so as to cope with a rapid progress toward portable, cordless electronic equipments. Lithiated cobalt dioxide has been studied as a cathode active material in a lithium secondary battery. In fact, lithiated cobalt dioxide has already been put into practical use in the lithium secondary batteries as a power source for cellular phones and camcorders. More recent years have seen active studies on the application of lithiated nickel dioxide obtained from nickel compounds which are more abundant in terms of resources and hence, less costly than cobalt compounds.

Lithiated nickel dioxide, as well as lithiated cobalt dioxide, is a compound having an α-NaFeO₂ structure. However, it is difficult to synthesize lithiated nickel dioxide compared to lithiated cobalt dioxide, because nickel is easily substituted at a lithium site in lithiated nickel dioxide. Recent progress in the synthetic conditions has offered substantial practicability of stoichiometric composition of lithiated nickel dioxide presenting a high discharge capacity. However, the lithiated nickel dioxide still suffers capacity drop-off associated with repeated cycles of charging/discharging processes at a high capacity, or in other words, a poor cycle characteristic.

It is considered that heating lithiated nickel dioxide in a deeply charged state produces decomposition involving oxygen evolution at lower temperatures than heating charged lithiated cobalt dioxide, which is now put to practical use. Thus lithiated nickel dioxide has a disadvantageous property, considering safety when it is used in a lithium secondary battery.

It is an object of the invention to provide a lithium secondary battery having an excellent cycle characteristic even in cycles of charging/discharging processes at a high capacity and an enhanced safety in a charged state, as well as a cathode active material for use in the lithium secondary battery.

This object could be achieved on the basis of the finding that an excellent cycle characteristic at a high capacity and an enhanced safety in a charged state can be achieved by a lithium secondary battery of a high energy density comprising a cathode including, as an active material, a material that can be doped/undoped with lithium ions; an anode including, as an active material, a lithium metal, a lithium alloy or a material that can be doped/undoped with lithium ions; and a liquid or solid electrolyte; the cathode active material comprising lithiated nickel dioxide containing aluminum in a manner that the molar ratio x of aluminum to the sum of aluminum and nickel is in the range of 0.12≤x<0.15 in accordance with claim 1.

Furthermore, it has been found that particularly enhanced safety in a charged state can be achieved by a lithium secondary battery of a high energy density wherein the cathode active material comprises lithiated nickel dioxide containing aluminum in which the molar ratio x of aluminum to the sum of aluminum and nickel is in the range of 0.12≤x<0.15 in accordance with claim 1 and wherein the liquid or solid electrolyte contains a compound having a chemical formula including fluorine.

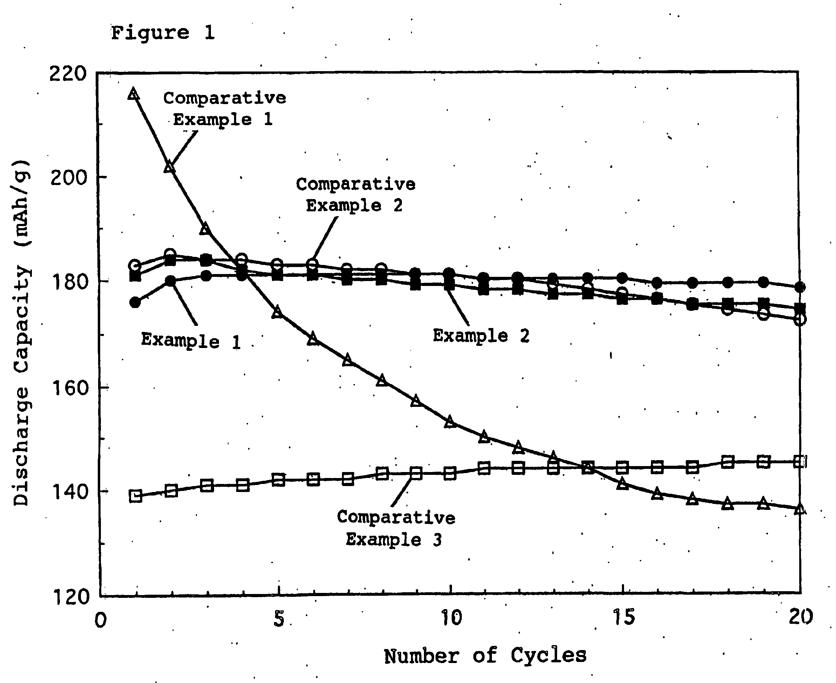

FIG. 1 is a graph showing the variations with cycles of the discharge capacities of products obtained in Examples 1 and 2 and Comparative Examples 1 to 3.

That is, in accordance with a first mode of the invention, the lithium secondary battery comprises a cathode comprising, as an active material, a material that can be doped/undoped with lithium ions, an anode comprising, as an active material, a lithium metal, a lithium alloy or a material that can be doped/undoped with lithium ions, and a liquid or solid electrolyte, the cathode active material comprising lithiated nickel dioxide containing aluminum, the molar ratio x of aluminum to the sum of aluminum and nickel being in the range of 0.12≤x<0.15.

In accordance with a second mode of the invention, the lithium secondary battery of the first mode of the invention is characterized in that the liquid or solid electrolyte comprises a compound having a chemical formula including fluorine.

In accordance with a third mode of the invention, the lithium secondary battery of the first mode of the invention is characterized in that the liquid or solid electrolyte comprises an organic solvent having at least one substituent including fluorine.

In accordance with a fourth mode of the invention, the cathode active material for use in the lithium secondary battery comprises lithiated nickel dioxide containing aluminum, and is obtained in a manner that the molar ratio x of aluminum to the sum of aluminum and nickel is in the range of 0.12≤x<0.15 and by the steps of dispersing a nickel compound in an aqueous solution including an aluminum compound and a water-soluble lithium compound, evaporating the water content of the resultant solution to obtain a mixture, and firing the resultant mixture in an atmosphere containing oxygen.

In accordance with a fifth mode of the invention, the cathode active material for use in the cathode of the lithium secondary battery comprises lithiated nickel dioxide containing aluminum, and is obtained in a manner that the molar ratio x of aluminum to the sum of aluminum and nickel is in the range of 0.12≤x<0.15 and by the steps of dry-mixing an aluminum compound, lithium hydroxide and a nickel compound, and firing the resultant mixture in an atmosphere containing oxygen.

The present invention will hereinbelow be described in detail.

A lithium secondary battery according to the invention is characterized in that the cathode comprises an active material that can be doped/undoped with lithium ions, which active material is lithiated nickel dioxide containing aluminum.

A process suitable for obtaining lithiated nickel dioxide containing aluminum, or for adding aluminum to lithiated nickel dioxide may comprise the steps of mixing aluminum or an aluminum compound with previously synthesized lithiated nickel dioxide, and firing the resultant mixture. However, a process comprising the steps of mixing a lithium compound, a nickel compound and aluminum or an aluminum compound together and firing the resultant mixture is more preferred in the light of a simplified production process and uniform incorporation of aluminum.

Another process to obtain lithiated nickel dioxide containing aluminum comprises the steps of firing a mixture of a nickel compound and aluminum or an aluminum compound, followed by mixing the resultant product with a lithium compound and firing the resultant mixture again. Likewise, a mixture of a lithium compound and aluminum or an aluminum compound may first be fired and thereafter, the resultant product may be mixed with a nickel compound to be fired.

Examples of the lithium compound used in the invention include lithium carbonate, lithium nitrate and lithium hydroxide and the like. Examples of the nickel compound used in the invention include nickel oxide, nickel oxyhydroxide, nickel hydroxide, nickel nitrate, nickel carbonate (NiCO₃·wH₂O (wherein w≥0), basic nickel carbonate (xNiCO₃·yNi(OH)₂·zH₂O (wherein x>0, y>0, z>0) and acidic nickel carbonate (Niₘ H₂ₙ(CO₃)ₘ₊ₙ(wherein m>0, n>0). Examples of a raw material for added aluminum include metal aluminum and aluminum compounds such as aluminum oxide, aluminum oxyhydroxide, aluminum hydroxide and aluminum nitrate.

The mixing ratio of lithium compound to the combination of nickel compound and aluminum compound is preferably in the range of 1.0 ≤ Li/(Ni+Al)≤ 1.2. If the mixing ratio is smaller than 1.0, the resultant composite oxide is detrimentally deficient in lithium. On the other hand, if the mixing ratio is greater than 1.2, a composite oxide of aluminum and lithium, Li₅AlO₄, may be produced and interfere with an effect of the added aluminum.

In the process wherein a lithium compound, a nickel compound and an aluminum compound are mixed together to be fired, it is preferred to follow the steps of dispersing the nickel compound in an aqueous solution including the aluminum compound and the water-soluble lithium compound, evaporating the water content of the resultant solution to obtain a mixture, and firing the resultant mixture in an atmosphere containing oxygen. Such a process allows the water-soluble lithium compound to be uniformly mixed with the aluminum compound and the nickel compound and therefore, the resultant lithiated nickel dioxide containing aluminum is prevented from suffering a nonuniform composition involving partial deficiency of lithium. Additionally, an amount of lithium to be added in excess with respect to the mixing ratio of the ingredients can be decreased.

It is preferable to use a nickel compound having a small mean particle size and a great specific surface area in the light of the dispersibility thereof and the deposition of the water-soluble lithium compound on the surface of the nickel compound. More specifically, a preferred nickel compound has a mean particle size of not greater than 50 µm and a specific surface area of not smaller than 1 m²/g.

A preferred combination of ingredients is a combination of lithium nitrate as the water-soluble lithium compound and basic nickel carbonate as the nickel compound and is preferably adopted in this process thereby to offer a lithiated nickel dioxide containing aluminum suitable for producing a lithium secondary battery of a high energy density.

At this time, the pH of the aqueous solution containing the aluminum compound and the water-soluble lithium compound may be adjusted to 10 or above so as to enhance the dispersibility of the aluminum compound or to dissolve a part of or the whole amount of the aluminum compound therein for further uniformly mixed state. Although the adjustment of the pH can be accomplished by adding a basic compound to the aqueous solution, it is preferred to add a compound, even in a minute quantity, such as not adversely affect the synthesis of the lithiated nickel dioxide containing aluminum. Examples of the basic compound usable for the pH adjustment include lithium hydroxide, lithium carbonate, lithium oxide and lithium peroxide. Above all, lithium hydroxide and lithium carbonate are suitable in terms of lower cost and easy handling.

Another preferred process in addition to the above wherein a lithium compound, a nickel compound and an aluminum compound are mixed together to be fired, comprises the steps of dry-mixing lithium hydroxide, a nickel compound and an aluminum compound, and firing the resultant mixture in an atmosphere containing oxygen. With this process, lithiated nickel dioxide containing aluminum having a great primary particle size can be obtained.

The use of nickel sesquioxide (Ni₂O₃) as the nickel compound in this process provides a particularly favorable effect of reducing the reaction rate when lithiated nickel dioxide containing aluminum in a deeply charged state is heated.

The firing process preferably proceeds in an atmosphere containing oxygen, more preferably in an atmosphere of oxygen and particularly preferably in a stream of oxygen.

The firing temperature is preferably in the range between 350°C and 800°C, and more preferably in the range between 600°C and 750°C. If the firing temperature exceeds 800°C, the resultant lithiated nickel dioxide includes a greater proportion of a domain of rock salt structure wherein lithium ions and nickel ions are irregularly arranged, which inhibits reversible charging/discharging processes. If, on the other hand, the firing temperature is below 350°C, the generation reaction for lithiated nickel dioxide hardly proceeds.

The firing time is preferably 2 hours or more, and more preferably 5 hours or more. In practical terms, a preferred firing time is less than 40 hours.

The content of aluminum should satisfy the condition of a molar ratio x of aluminum to the sum of aluminum and nickel in the range of 0.12≤x<0.15. The addition of aluminum imparts the lithiated nickel dioxide with an excellent cycle characteristic even in the charging/discharging processes at a high capacity. In the case of a molar ratio x of less than 0.10, the addition of aluminum fails to produce a sufficient stabilization effect for shifting the decomposition involving oxygen evolution to higher temperatures and slowing down the reaction, when the active material in a deeply charged state is heated. On the other hand, in the case of a molar ratio x of greater than 0.20, the discharge capacity is decreased, although a good cycle characteristic and the aforementioned stabilization effect are accomplished. The molar ratio is in the range of 0.12≤x≤0.15 in the light of the energy density of a resultant battery.

The cathode of the lithium secondary battery of the invention includes the active material of the aforementioned lithiated nickel dioxide containing aluminum according to the invention, and can further include other components such as a carbonaceous material as a conductive substance and a thermoplastic resin as a binder.

Examples of the carbonaceous material include natural graphite, artificial graphite, cokes and carbon black.

Such conductive substances may be used alone or in combination as a composite conductive substance, such as of artificial graphite and carbon black.

Examples of the thermoplastic resin include poly(vinylidene fluoride) (which may hereinafter be referred to as "PVDF"), polytetrafluoroethylene (which may hereinafter be referred to as "PTFE"), tetrafluoroethylene-hexafluoropropylene-vinylidene fluoride copolymer, hexafluoropropylene-vinylidene fluoride copolymer and tetrafluoroethylene-perfluorovinyl ether copolymer. The above resins may be used alone or in combination of two or more.

It is preferred to use a composite binder including a fluoroplastic and a polyolefin resin, wherein a concentration of the fluoroplastic is 1 to 10 wt% of the cathode composition and a concentration of the polyolefin resin is 0.1 to 2 wt% of the cathode composition, because the combination of such a composite binder and the cathode active material of this invention presents a good binding characteristic with a current collector and besides, a further improved safety against external heating such as represented by a heating test.

Examples of a usable cathode current collector include Al, Ni and stainless steel. Above all, Al is most preferred because Al is readily processed into a thin film and less costly. The composition containing the cathode active material may be applied to the cathode current collector by various methods, such as press forming.
Alternatively, the composition may be pasted by the use of a solvent or the like, applied to the current collector, dried and adhered thereto by pressing.

The anode of the lithium secondary battery of the invention includes a lithium metal, a lithium alloy or a material that can be doped/undoped with lithium ions. Examples of the material that can be doped/undoped with lithium ions include carbonaceous materials such as natural graphite, artificial graphite, cokes, carbon black, pyrolytic carbons, carbon fibers and fired products of organic polymer compounds; and a chalcogen compound of oxide or sulfide, which compound can be doped/undoped with lithium ions at lower potentials than in the cathode. A carbonaceous material including a graphite material such as natural graphite and artificial graphite as a main component is preferred, because the combination of such a carbonaceous material and a cathode provides a high energy density due to the flatness of their charging/discharging potential and low average working potential.

As to a combination of the anode with a liquid electrolyte, in case where the liquid electrolyte does not contain ethylene carbonate, an anode containing poly(ethylene carbonate) is preferably used to improve the cycle characteristic and the large-current discharging characteristic of the battery.

The carbonaceous material can be in any shape including a flaky shape like natural graphite, a spherical shape like mesocarbon micro-beads, a fibrous shape like graphitized carbon fiber and an agglomerate of fine powders. If required, a thermoplastic resin as a binder can be added to the carbonaceous material. Examples of a usable thermoplastic resin include PVDF, polyethylene and polypropylene.

Examples of the chalcogen compound of an oxide, sulfide and such, used as the anode, include crystalline or amorphous oxides essentially comprised of a group XIII element, a group XIV element and a group XV element of the periodic table, such as amorphous compounds essentially comprised of tin compounds. Similarly to the above, there can be added, as required, a carbonaceous material as the conductive substance, or a thermoplastic resin as the binder.

Examples of a usable anode current collector include Cu, Ni and stainless steel. Above all, Cu is particularly preferably used in the lithium secondary battery because Cu hardly combines with lithium to form an alloy and is readily processed into a thin film. The composition containing the anode active material may be applied to the anode current collector by various methods, such as press forming. Alternatively, the composition may be pasted by the use of e.g. a solvent, applied to the current collector, dried and adhered thereto by pressing.

Examples of a separator employed by the lithium secondary battery according to the invention include fluoroplastics; olefin resins such as polyethylene and polypropylene; and unwoven or woven fabrics such as of nylon. In the light of a higher energy density per volume and a smaller internal resistance, the separator preferably has the smallest possible thickness as long as the mechanical strength is secured. A preferred thickness thereof is in the range between 10 and 200 µm.

Examples of the electrolyte employed by the lithium secondary battery according to the invention include a nonaqueous electrolyte solution in which a lithium salt is dissolved in an organic solvent, and any one of the known solid electrolytes. Above all, preferred is an electrolyte containing a compound having a chemical formula including fluorine, which provides a particularly excellent stabilization effect. Examples of the lithium salt include LiClO₄, LiPF₆, LiASF₆, LiSbF₆, LiBF₄, LiCF₃SO₃, LiN(CF₃SO₂)₂, LiC(CF₃SO₂)₃, Li₂B₁₀Cl₁₀, lower aliphatic lithium carboxylate and LiAlCl₄. These salts may be used alone or in combination of plural types. It is preferred to use at least one of the salts containing fluorine or at least one salt selected from a group consisting of LiPF₆, LiBF₄, LiCF₃SO₃, LiN(CF₃SO₂)₂ and LiC(CF₃SO₂)₃, in particular.

Examples of the organic solvent usable for the lithium secondary battery according to the invention include carbonates such as propylene carbonate, ethylene carbonate, dimethyl carbonate, diethyl carbonate, ethyl methyl carbonate, 4-trifluoromethyl-1,3-dioxolane-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyl tetrahydrofuran; esters such as methyl formate, methyl acetate and γ-butyrolactone; nitriles such as acetonitrile,and butyronitrile;amides such as N,N-dimethylformamide and N,N-dimethylacetoamide; carbamates such as 3-methyl-2-oxazolidone; sulfur-containing compounds such as sulfolane, dimethylsulfoxide and 1,3-propane sultone; and the above organic solvents with a substituent including fluorine introduced therein. Normally, two or more compounds of the above are used in combination. Above all, a mixed solvent containing a carbonate is preferred and more preferred is a mixed solvent of a cyclic carbonate and a non-cyclic carbonate or of a cyclic carbonate and an ether.

As the mixed solvent of a cyclic carbonate and a non-cyclic carbonate, preferred is a mixed solvent containing ethylene carbonate, dimethyl carbonate and ethyl methyl carbonate, because such a mixed solvent provides a wide operating temperature range, an excellent drain capability and hardly decomposes even when the graphite material such as natural graphite and artificial graphite is used as an anode active material.

In the light of a particularly excellent stabilization effect, an electrolyte comprising an organic solvent having at least one substituent including fluorine is preferred. A mixed solvent comprising an ether having at least one substituent including fluorine such as pentafluoropropyl methyl ether and 2,2,3,3-tetrafluoropropyl difluoromethyl ether in combination with dimethyl carbonate is more preferred because of its good high-current discharge characteristic.

Examples of a usable solid electrolyte include polymer electrolytes such as polyethylene oxide polymer compounds and polymer compounds containing at least one of a polyorganosiloxane branch or polyoxyalkylene branch; sulfide electrolytes such as of Li₂S-SiS₂, Li₂S-GeS₂, Li₂S-P₂S₅ and Li₂S-B₂S₃; and inorganic compound electrolytes comprising sulfides such as Li₂S-SiS₂-Li₃PO₄ and Li₂S-SiS₂-Li₂SO₄.

Additionally, also usable is a so-called gel-type electrolyte in which a nonaqueous liquid electrolyte is maintained by a polymer.

It is to be noted that the lithium secondary battery according to the invention is not particularly limited in shape and may have any one of the shapes such as a paper-sheet shape, a coin-like shape, a cylindrical shape and a rectangular parallelepiped shape.

In accordance with the invention, there can be attained a lithium secondary battery of a high energy density presenting a good cycle characteristic even in the charging/discharging process at a high capacity and an increased safety in the charged state. The reason why the invention can provide such batteries having excellent characteristics is yet to be clarified. However, it is presumed that the added aluminum may serve as a substituent to be inserted into a nickel site of the crystal structure of lithiated nickel dioxide, thereby stabilizing the structure of lithiated nickel dioxide when deeply charged, contributing an excellent cycle characteristic during the charging/discharging process at a high capacity. It is also presumed that incorporation of aluminum may shift the decomposition involving the oxygen evolution to high temperatures and reduce the reaction rate, which decomposition is triggered by heating the deeply charged lithiated nickel dioxide. As to the latter effect, it is thought to be possible that the product of the decomposition reaction contains aluminum thereby functioning as a passive state coating.

Further, the reason for the particularly good stabilization effect offered by a combination of the liquid or solid electrolyte including fluorine and the cathode active material of this invention is yet to be clarified. However, it is presumed that some reaction product containing fluorine may be produced on the surface of the active material incorporating aluminum thereby further retarding the reaction taking place when the charged active material is heated.

Although preferred embodiments of the invention will hereinbelow be described in detail, it is to be noted that the invention should not be limited to these embodiments. Unless otherwise particularly noted, an electrode and a plate battery for the charging/discharging test were prepared in the following manners.

Lithiated nickel dioxide or lithiated nickel dioxide containing aluminum was milled with alumina ball mill in an atmosphere of carbon dioxide. Then, to a mixture of lithiated nickel dioxide or lithiated nickel dioxide containing aluminum, as the active material, and acetylene black, as the conductive substance, there was added a solution of PVDF, as the binder, dissolved in 1-methyl-2-pyrrolidone (which may hereinafter be referred to as "NMP") in a ratio of active material:conductive substance: binder =91:6:3 (weight ratio). The resultant mixture was kneaded to obtain a paste. The paste was coated over a #200 stainless steel mesh, which was to work as a current collector, and the mesh bearing the paste was dried under vacuum at a temperature of 150°C for 8 hours. Thus, a cathode was obtained.

The resultant cathode, an electrolyte comprising a mixed solution of ethylene carbonate (which may hereinafter be referred to as "EC"), dimethyl carbonate (which may hereinafter be referred to as "DMC") and ethyl methyl carbonate (which may hereinafter be referred to as "EMC") in a ratio of 30:35:35, in which mixed solution LiPF₆ was dissolved in a concentration of 1 mol/l (which may hereinafter be represented by LiPF₆/EC+DMC+EMC), a polypropylene microporous membrane as the separator, and a lithium metal as the counter electrode (i.e., an anode) were assembled together to form the plate battery.

### Example 1

### (1) Synthesis of a Cathode Active Material and Evaluation of Cycle Characteristic

First, 15.21 g of aluminum hydroxide [Al(OH)₃: reagent of 3N grade commercially available from Kojundo Chemical Laboratory Co., Ltd.] was added to 150 g of water to be fully dispersed therein. Subsequently, 110.24 g of lithium nitrate [of chemical grade which is available from Konan Muki Ltd.] was dissolved therein. Thereafter, 176.63 g of basic nickel carbonate [xNiCO₃·yNi(OH)₂·zH₂O: 43% Nickel Carbonate^{™} commercially available from Nihon Kagaku Sangyo Co., Ltd.] was added to and homogeneously dispersed in the obtained solution. The resultant mixture was dried and charged in a tubular furnace having an alumina core tube and fired in a stream of oxygen at 720°C for 15 hours. At this point, the molar ratio x of aluminum to the sum of aluminum and nickel was set to be 0.13.

By using thus obtained powder (hereinafter, referred to as "Powder A"), a plate battery was manufactured and subjected to a charging/discharging test using charge by a constant current and voltage, and discharge by a constant current under the following conditions.
Max. charging voltage: 4.4 V, Charging time: 8 hours,
Charging current: 0.5 mA/cm²
Min. discharging voltage: 3.0 V,
Discharging current: 0.5 mA/cm²

Fig. 1 is a graphical representation of the variations of the discharge capacity in 20 cycles of charging/discharging processes. Despite repeated charging/discharging cycles based on a high charging voltage of 4.4 V and a high capacity of about 180 mAh/g, a preferable cycle characteristic was presented.

### (2) Preparation of Cathode Sheet

To a mixture of an active material of Powder A and conductive substance of powdery artificial graphite and acetylene black, there was added an NMP solution containing PVDF as a binder in a ratio of active material: artificial graphite: acetylene black: PVDF = 87: 9: 1: 3 (weight ratio). The resultant mixture was kneaded to obtain a paste of cathode composition. The resultant paste was applied to predetermined portions of the both sides of a current collector formed of a 20 µm-thick aluminum foil sheet and then was dried. Subsequently, the foil sheet was roll-pressed to give the cathode sheet.

### (3) Preparation of Anode Sheet

An active material of graphitized carbon fiber and an NMP solution containing PVDF as a binder were mixed together in a ratio of active material: PVDF = 94: 6 (weight ratio) and kneaded to obtain a paste of anode composition. The resultant paste was applied to predetermined portions of the both sides of a current collector formed of a 10 µm-thick copper foil sheet and then was dried. Subsequently, the foil sheet was roll-pressed to give the anode sheet.

### (4) Preparation of Cylinder Battery and Heating Test

The cathode sheet and the anode sheet thus prepared and a separator formed of a 25 µm-thick polypropylene microporous film were laminated in the order of the anode, the separator, the cathode and the separator, so as to form a lamination. The lamination was wound into a roll to form an electrode assembly shaped like a volute in section.

The aforesaid electrode assembly was inserted in a battery can in which the electrode assembly was impregnated with a nonaqueous electrolyte comprising a 50:50 mixed solution of DMC and 2,2,3,3-tetrafluoropropyl difluoromethyl ether having LiPF₆ dissolved therein in a concentration of 1 mol/l. Subsequently, a battery lid also serving as a cathode terminal with a safety vent was crimped onto the battery can and thus was obtained a cylinder battery of 18650 size.

Five of the cylinder batteries thus prepared were charged by a constant current and voltage method with max. charging voltage of 4.4 V until they were overcharged With the outer surface temperature of the battery can be measured by means of a thermo-couple, the overcharged batteries were heated in an oven at a rate of temperature rise of 5°C/min. and then, maintained at 180°C for 1 hour. Despite the severe condition of overcharge, none of the batteries subject to the test exploded or produced fire.

### Example 2

15.21 g of aluminum hydroxide [Al(OH)₃:reagent of 3N grade commercially available from Kojundo Chemical Laboratory Co., Ltd.], 66.09 g of lithium hydroxide monohydrate [LiOH-H₂O: Wako Pure Chemical Industries, Ltd.] and 124.53 g of nickel hydroxide [containing 61.52 % of nickel, commercially available from Nihon Kagaku Sangyo Co., Ltd.] were dry-mixed in a ball mill using alumina balls. The resultant mixture was charged in a tubular furnace having an alumina core tube and fired in a stream of oxygen at 720°C for 15 hours. At this point, the molar ratio x of aluminum to the sum of aluminum and nickel was set to be 0.13.

By using thus obtained powder (hereinafter, referred to as "Powder B"), a plate battery was manufactured and subjected to the charging/discharging test using charge by a constant current and voltage, and discharge by a constant current under the same conditions as in Example 1. Fig. 1 is a graphical representation of the variations of the discharge capacity in 20 cycles of charging/discharging processes. Despite repeated charging/discharging cycles based on a high charging voltage of 4.4 V and a high capacity of about 180 mAh/g, a preferable cycle characteristic was presented.

Next, a cylinder battery of 18650 size was prepared in the same manner as in Example 1 except for that the cathode active material was replaced by Powder B. Five of the cylinder batteries thus prepared were charged by a constant current and voltage method with max. charging voltage of 4.4 V until they were overcharged. With the outer surface temperature of the battery can measured by means of the thermo-couple, the overcharged batteries were heated in an oven at a rate of temperature rise of 5°C/min. and then, maintained at 180°C for 1 hour. Despite the severe condition of overcharge, none of the batteries subject to the test exploded or produced fire.

### Comparative Example 1

110.24 g of lithium nitrate [of chemical grade which is available from Konan Muki Ltd.] and 203.02 g of basic nickel carbonate [xNiCO)₃·yNi(OH)₂·zH₂O: 43% Nickel Carbonates^{™} commercially available from Nihon Kagaku Sangyo Co., Ltd.] were dry-mixed in a ball mill using alumina balls. The resultant mixture was charged in a tubular furnace having an alumina core tube and fired in a stream of oxygen at 720°C for 15 hours.

By using thus obtained powder (hereinafter, referred to as "Powder R1"), a plate battery was manufactured and subjected to the charging/discharging test using charge by a constant current and voltage, and discharge by a constant current under the same conditions as in Example 1. Fig. 1 is a graphical representation of the variations of the discharge capacity in 20 cycles of charging/discharging processes. The discharge capacity dropped off because of the high charging voltage of 4.4 V and the cycling at the high capacity.

Next, a cylinder battery of 18650 size was prepared in the same manner as in Example 1 except for that the active material for cathode was replaced by Powder R1. Five of the cylinder batteries thus prepared were charged by constant current and voltage method with max. charging voltage of 4.4 V until they were overcharged. With the outer surface temperature of the battery can be measured by means of the thermo-couple, the overcharged batteries were heated in an oven at a rate of temperature rise of 5°C/min. All of the batteries exploded to catch fire before the temperature reached 180°C.

### Comparative Example 2

11.70 g of aluminum hydroxide [Al(OH)₃:reagent of 3N grade commercially available from Kojundo Chemical Laboratory Co., Ltd.], 66.09 g of lithium hydroxide monohydrate [LiOH·H₂O: Wako Pure Chemical Industries, Ltd.] and 128.82 g of nickel hydroxide [containing 61.52 % of nickel, commercially available from Nihon Kagaku Sangyo Co., Ltd.] were dry-mixed in a ball mill using alumina balls. The resultant mixture was charged in a tubular furnace having an alumina core tube and fired in a stream of oxygen at 720°C for 15 hours. At this point, the molar ratio x of aluminum to the sum of aluminum and nickel was set to be 0.10.

By using thus obtained powder (hereinafter, referred to as "Powder R2"), a plate battery was manufactured and subjected to the charging/discharging test using charge by a constant current and voltage, and discharge by a constant current under the same conditions as in Example 1. Fig. 1 is a graphical representation of the variations of the discharge capacity in 20 cycles of charging/discharging processes. Despite repeated charging/discharging cycles based on a high charging voltage of 4.4 V and a high capacity of about 180 mAh/g, a preferable cycle characteristic was presented.

Next, a cylinder battery of 18650 size was prepared in the same manner as in Example 1 except for that the cathode active material was replaced by Powder R2. Five of the cylinder batteries thus prepared were charged by a constant current and voltage method with max. charging voltage of 4.4 V until they were overcharged. With the outer surface temperature of the battery can measured by means of the thermo-couple, the overcharged batteries were heated in an oven at a rate of temperature rise of 5°C/min. and then, maintained at 180°C. Out of the five batteries subject to the test, two batteries exploded to catch fire within the period of 1 hour in which they were maintained at 180°C.

### Comparative Example 3

23.40 g of aluminum hydroxide [Al(OH)₃:reagent of 3N grade commercially available from Kojundo Chemical Laboratory Co., Ltd.], 66.09 g of lithium hydroxide monohydrate [LiOH·H₂O: Wako Pure Chemical Industries, Ltd.] and 114.51 g of nickel hydroxide [containing 61.52 % of nickel, commercially available from Nihon Kagaku Sangyo Co., Ltd.] were dry-mixed in a ball mill using alumina balls. The resultant mixture was charged in a tubular furnace having an alumina core tube and fired in a stream of oxygen at 720°C for 15 hours. At this point, the molar ratio x of aluminum to the sum of aluminum and nickel was set to be 0.20.

By using thus obtained powder (hereinafter, referred to as "Powder R3"), a plate battery was manufactured and subjected to the charging/discharging test using charge by a constant current and voltage, and discharge by a constant current under the same conditions as in Example 1. Fig. 1 is a graphical representation of the variations of the discharge capacity in 20 cycles of charging/discharging processes. Despite repeated charging/discharging cycles based on a high charging voltage of 4.4 V, a preferable cycle characteristic was presented but the discharge capacity was decreased to about 145 mAh/g.

Next, a cylinder battery of 18650 size was prepared in the same manner as in Example 1 except that the cathode active material was replaced by Powder R3. Five of the cylinder batteries thus prepared were charged by a constant current and voltage method with max. charging voltage of 4.4 V until they were overcharged. With the outer surface temperature of the battery can measured by means of the thermo-couple, the overcharged batteries were heated in an oven at a rate of temperature rise of 5°C/min. and then, maintained at 180°C for 1 hour. Despite the severe condition of overcharge, none of the batteries subject to the test exploded or produced fire.

### Comparative Example 4

In order to examine the reaction behavior of a deeply charged active material when it is heated, the following steps were performed for a sealed DSC measurement. First, Powder R1 was used in combination with a lithium metal to prepare a plate battery which was subject to a constant current and voltage charge process under the conditions of charging voltage at 4.4 V, charging time of 12 hours and charge current at 0.5 mA/cm². Next, the battery was diassembled in a glove box filled with argon so as to take out a cathode. The cathode was washed with DMC and dried. Thereafter, the cathode composition was collected from the current collector so that a 3-mg sample of the charged cathode composition was obtained by the use of a balance. The sample thus obtained was put in a seal cell formed of stainless steel, into which was poured 1 µl of nonaqueous electrolyte comprising a mixed solution of EC, DMC and EMC at a ratio of 30: 35:35 with LiPF₆ dissolved therein in a concentration of 1 mol/l, so as to wet the charged cathode composition. Subsequently, the cell was sealed by the use of a jig.

Next, the stainless-steel cell sealing in the aforesaid sample was set in DSC 220 commercially available from Seiko Instruments Inc. and subject to measurement at a rate of temperature rise of 10°C/min. The sample presented a very sharp spike-like exothermic behavior typically observed in thermal runaway.

### Example 3

The sealed DSC measurement was made in the same manner as in Comparative Example 4, except for that Powder A was used instead of Powder R1. In this example, a spike-like exothermic behavior was not observed. Additionally, an exothermic onset temperature was higher than that of Comparative Example 4. Thus, it was confirmed that the reaction rate of the deeply charged active material, as heated, was reduced.

### Example 4

The sealed DSC measurement was made in the same manner as in Comparative Example 4, except for that Powder B was used instead of Powder R1. In this example, a spike-like exothermic behavior was not observed. Additionally, an exothermic onset temperature was lower than that of Example 3 but higher than that of Comparative Example 4. Thus, it was confirmed that the reaction rate of the deeply charged active material, as heated, was reduced.

### Example 5

The sealed DSC measurement was made in the same manner as in Comparative Example 4, except for that Powder A was used instead of Powder R1 and that a nonaqueous electrolyte comprising a mixed solution of EC, DMC and EMC at a ratio of 30: 35:35 with LiClO₄ dissolved therein in a concentration of 1 mol/l was used to wet the charged cathode composition. In this example, a spike-like exothermic behavior was not observed. Additionally, an exothermic onset temperature was lower than that of Example 3 but higher than that of Comparative Example 4. Thus, it was confirmed that the reaction rate of the deeply charged active material, as heated, was reduced.

### Example 6

The sealed DSC measurement was made in the same manner as in Comparative Example 4, except for that Powder A was used instead of Powder R1 and that a nonaqueous electrolyte comprising a mixed solution of DMC and 2,2,3,3-tetrafluoropropyl difluoromethyl ether at a ratio of 50:50 with LiClO₄ dissolved therein in a concentration of 1 mol/l was used to wet the charged cathode composition. In this example, a spike-like exothermic behavior was not observed. Additionally, an exothermic onset temperature was higher than those of Comparative Example 4 and Example 5. Thus, it was confirmed that the reaction rate of the deeply charged active material, as heated, was reduced.

### Example 7

The sealed DSC measurement was made in the same manner as in Comparative Example 4, except for that Powder A was used instead of Powder R1 and that a nonaqueous electrolyte comprising a mixed solution of DMC and 2,2,3,3-tetrafluoropropyl difluoromethyl ether at a ratio of 50:50 with LiPF₆ dissolved therein in concentration of 1 mol/l was used to wet the charged cathode composition. In this example, a spike-like exothermic behavior was not observed. Additionally, an exothermic onset temperature was higher than that of Example 6. Thus, it was confirmed that the reaction rate of the deeply charged active material, as heated, was reduced.

### Example 8

4.06 g of aluminum hydroxide [Al(OH)₃:reagent of 3N grade commercially available from Kojundo Chemical Laboratory Co., Ltd.], 17.62 g of lithium hydroxide monohydrate [LiOH·H₂O: Wako Pure Chemical Industries, Ltd.] and 30.17 g of nickel sesquioxide [containing 67.7 % of nickel, commercially available from Hayashi Pure Chemical Ind., Ltd.] were dry-mixed in a ball mill using alumina balls. The resultant mixture was charged in a tubular furnace having an alumina core tube and fired in a stream of oxygen at 720°C for 15 hours. At this point, the molar ratio x of aluminum to the sum of aluminum and nickel was set to be 0.13.

The sealed DSC measurement was made in the same manner as in Comparative Example 4, except for that the powder thus obtained (hereinafter, referred to as "Powder C") was used instead of Powder R1 and that a nonaqueous electrolyte comprising a mixed solution of DMC and 2,2,3,3-tetrafluoropropyl difluoromethyl ether at a ratio of 50:50 with LiPF₆ dissolved therein in a concentration of 1 mol/l was used to wet the charged cathode composition. In this example, a spike-like exothermic behavior was not observed. Additionally, an exothermic onset temperature was even higher than that of Example 7. Thus, it was confirmed that the reaction rate of the deeply charged active material, as heated, was greatly reduced.

The lithium secondary battery according to the invention features an excellent cycle characteristic even in charging/discharging processes at a high capacity and improved safety in a charged state and particularly in an overcharged state, thus having quite a great value in the industrial field.

## Claims

1. A lithium secondary battery comprising; a cathode including, as an active material, a material that can be doped/undoped with lithium ions;
an anode including, as an active material, a lithium metal, a lithium alloy or a material that can be doped/undoped with lithium ions; and
a liquid or solid electrolyte,
wherein lithiated nickel dioxide containing aluminum which consists essentially of Li, Ni, Al and O is used as said cathode active material,
said aluminum is partially substituted into the nickel sites of the crystal structure of lithiated nickel dioxide and the molar ratio x of aluminum to the sum of aluminum and nickel in said lithiated nickel dioxide containing aluminum is in the range of 0.12≦x<0.15.

2. A lithium secondary battery according to Claim 1, wherein the lithiated nickel dioxide containing aluminum is obtained by firing a mixture of a lithium compound, a nickel compound, and aluminum or an aluminum compound.

3. A lithium secondary battery according to Claim 2, wherein the lithiated nickel dioxide containing aluminum is obtained by the step of dispersing a nickel compound in an aqueous solution including an aluminum compound and a water-soluble lithium compound, evaporating the water content of the resultant solution to obtain a mixture, and firing the resultant mixture in an atmosphere containing oxygen.

4. A lithium secondary battery according to Claim 3, wherein the water-soluble lithium compound is lithium nitrate and the nickel compound is basic nickel carbonate.

5. A lithium secondary battery according to Claim 2, wherein the lithiated nickel dioxide containing aluminum is obtained by the steps of dry-mixing lithium hydroxide, a nickel compound and an aluminum compound, and firing the resultant mixture in an atmosphere containing oxygen.

6. A lithium secondary battery according to any one of Claims 2, 3 and 5, wherein the nickel compound is nickel sesquioxide.

7. A lithium secondary battery according to any one of Claims 1 to 6, wherein the liquid or solid electrolyte comprises a compound having a chemical formula including fluorine.

8. A lithium secondary battery according to any one of Claims 1 to 7, wherein the liquid or solid electrolyte contains at least one lithium salt selected from a group consisting of LiPF₆, LiBF₄, LiCF₃SO₃, LiN(CF₃SO₂)₂ and LiC(CF₃SO₂)₃.

9. A lithium secondary battery according to any one of Claims 1 to 8, wherein the liquid or solid electrolyte comprises an organic solvent having at least one substituent including fluorine.

10. A cathode active material for use in a lithium secondary battery comprising lithiated nickel dioxide containing aluminum which consists essentially of Li, Ni, Al and O and obtainable in a manner that the molar ratio x of aluminum to the sum of aluminum and nickel is in the range of 0.12≦x<0.15 and by the steps of dispersing a nickel compound in an aqueous solution including an aluminum compound and a water-soluble lithium compounds evaporating a water content of the resultant solution to obtain a mixture, and firing the resultant mixture in an atmosphere containing oxygen, wherein said aluminum is partially substituted into the nickel sites of the crystal structure of lithiated nickel dioxide.

11. A cathode active material for use in a lithium secondary battery comprising lithiated nickel dioxide containing aluminum which consists essentially of Li, Ni, Al and O and obtainable in a manner that the molar ratio x of aluminum to the sum of aluminum and nickel is in the range of 0.12≦x<0.15 and by the steps of dry-mixing an aluminum compound, lithium hydroxide and a nickel compound, and firing the resultant mixture in an atmosphere containing oxygen, wherein said aluminum is partially substituted into the nickel sites of the crystal structure of lithiated nickel dioxide.

## Patentansprüche

1. Lithiumsekundärbatterie umfassend:
eine Kathode, die als aktives Material ein Material einschließt, das mit Lithiumionen dotiert/undotiert sein kann;
eine Anode, die als aktives Material ein Lithiummetall, eine Lithiumlegierung oder ein Material, das mit Lithiumionen dotiert/undotiert sein kann, einschließt; und
einen flüssigen oder festen Elektrolyten,
wobei Aluminium enthaltendes lithiiertes Nickeldioxid, welches im Wesentlichen aus Li, Ni, Al und O besteht, als das aktive Kathodenmaterial verwendet wird, das Aluminium teilweise in die Nickelstellen der Kristallstruktur des lithiierten Nickeldioxids substituiert ist und das Molverhältnis x von Aluminium zu der Summe von Aluminium und Nickel in dem Aluminium enthaltenden lithiierten Nickeldioxid im Bereich von 0,12 ≤ x < 0,15 liegt.

2. Lithiumsekundärbatterie gemäß Anspruch 1, wobei das Aluminium enthaltende lithiierte Nickeldioxid durch Brennen eines Gemisches einer Lithiumverbindung, einer Nickelverbindung, und Aluminium oder einer Aluminiumverbindung erhalten wird.

3. Lithiumsekundärbatterie gemäß Anspruch 2, wobei das Aluminium enthaltende lithiierte Nickeldioxid erhalten wird durch den Schritt Dispergieren einer Nickelverbindung in einer wässrigen Lösung, die eine Aluminiumverbindung und eine wasserlösliche Lithiumverbindung einschließt, Verdampfen des Wassergehalts der erhaltenen Lösung, um ein Gemisch zu erhalten, und Brennen des erhaltenen Gemisches in einer Sauerstoff enthaltenden Atmosphäre.

4. Lithiumsekundärbatterie gemäß Anspruch 3, wobei die wasserlösliche Lithiumverbindung Lithiumnitrat ist und die Nickelverbindung basisches Nickelcarbonat ist.

5. Lithiumsekundärbatterie gemäß Anspruch 2, wobei das Aluminium enthaltende lithiierte Nickeldioxid durch die Schritte Trockenmischen von Lithiumhydroxid, einer Nickelverbindung und einer Aluminiumverbindung und Brennen des erhaltenden Gemisches in einer Sauerstoff enthaltenden Atmosphäre erhalten wird.

6. Lithiumsekundärbatterie gemäß einem der Ansprüche 2, 3 und 5, wobei die Nickelverbindung Nickelsesquioxid ist.

7. Lithiumsekundärbatterie gemäß einem der Ansprüche 1 bis 6, wobei der flüssige oder feste Elektrolyt eine Verbindung mit einer Fluor enthaltenden chemischen Formel umfasst.

8. Lithiumsekundärbatterie gemäß einem der Ansprüche 1 bis 7, wobei der flüssige oder feste Elektrolyt mindestens ein aus LiPF₆, LiBF₄, LiCF₃SO₃, LiN(CF₃SO₂)₂ und LiC(CF₃SO₂)₃ ausgewähltes Lithiumsalz enthält.

9. Lithiumsekundärbatterie gemäß einem der Ansprüche 1 bis 8, wobei der flüssige oder feste Elektrolyt ein organisches Lösungsmittel mit mindestens einem Fluor enthaltenden Substituenten umfasst.

10. Aktives Kathodenmaterial zur Verwendung in einer Lithiumsekundärbatterie, umfassend Aluminium enthaltendes lithiiertes Nickeldioxid, welches im Wesentlichen aus Li, Ni, A1 und O besteht, und auf eine Art, sodass das Molverhältnis x von Aluminium zu der Summe von Aluminium und Nickel im Bereich von 0,12 ≤ x < 0,15 liegt, und durch die Schritte Dispergieren einer Nickelverbindung in einer wässrigen Lösung, die eine Aluminiumverbindung und eine wasserlösliche Lithiumverbindung einschließt, Verdampfen des Wassergehalts der erhaltenen Lösung, um ein Gemisch zu erhalten, und Brennen des erhaltenen Gemisches in einer Sauerstoff enthaltenden Atmosphäre, wobei das Aluminium teilweise in die Nickelstellen der Kristallstruktur des lithiierten Nickeldioxids substituiert wird, erhältlich ist.

11. Aktives Kathodenmaterial zur Verwendung in einer Lithiumsekundärbatterie, umfassend Aluminium enthaltendes lithiiertes Nickeldioxid, welches im Wesentlichen aus Li, Ni, A1 und O besteht, und auf eine Art, sodass das Molverhältnis x von Aluminium zu der Summe von Aluminium und Nickel im Bereich von 0,12 ≤ x < 0,15 liegt, und durch die Schritte Trockenmischen einer Aluminiumverbindung, Lithiumhydroxid und einer Nickelverbindung, und Brennen des erhaltenen Gemisches in einer Sauerstoff enthaltenden Atmosphäre, wobei das Aluminium teilweise in die Nickelstellen der Kristallstruktur des lithiierten Nickeldioxids substituiert wird, erhältlich ist.

## Revendications

1. Pile secondaire au lithium, comprenant une cathode contenant comme matériau actif, un matériau qui peut être dopé/non dopé avec des ions lithium ; une anode contenant comme matériau actif, un métal lithium, un alliage de lithium ou un matériau qui peut être dopé/non dopé avec des ions lithium, et
un électrolyte liquide ou solide,
où le dioxyde de nickel lithié contenant de l'aluminium, qui consiste essentiellement en Li, Ni, Al et O, est utilisé comme matériau actif de cathode, ledit aluminium se substitue partiellement dans les sites du nickel de la structure cristalline du dioxyde de nickel lithié et le rapport molaire x de l'aluminium à la somme de l'aluminium et du nickel dans le dioxyde de nickel lithié, contenant de l'aluminium, se situe dans l'intervalle allant de 0,12 ≤ x < 0,15.

2. Pile secondaire au lithium selon la revendication 1, dans laquelle le dioxyde de nickel lithié contenant de l'aluminium est obtenu par cuisson d'un mélange d'un composé du lithium, d'un composé du nickel et d'aluminium ou d'un composé de l'aluminium.

3. Pile secondaire au lithium selon la revendication 2, dans laquelle le dioxyde de nickel lithié contenant de l'aluminium est obtenu par l'étape de dispersion d'un composé du nickel dans une solution aqueuse, comprenant un composé de l'aluminium et un composé du lithium soluble dans l'eau, l'évaporation de la teneur en eau de la solution résultante pour obtenir un mélange, et la cuisson du mélange résultant dans une atmosphère contenant de l'oxygène.

4. Pile secondaire au lithium selon la revendication 3, dans laquelle le composé du lithium soluble dans l'eau est le nitrate de lithium et le composé du nickel est un carbonate de nickel basique.

5. Pile secondaire au lithium selon la revendication 2, dans laquelle le dioxyde de nickel lithié contenant de l'aluminium est obtenu par les étapes de mélange à sec d'hydroxyde de lithium, d'un composé du nickel et d'un composé de l'aluminium, et de cuisson du mélange résultant dans une atmosphère contenant de l'oxygène.

6. Pile secondaire au lithium selon l'une quelconque des revendications 2, 3 et 5, dans laquelle le composé du nickel est le sesquioxyde de nickel.

7. Pile secondaire au lithium selon l'une quelconque des revendications 1 à 6, dans laquelle l'électrolyte liquide ou solide comprend un composé ayant une formule chimique comprenant du fluor.

8. Pile secondaire au lithium selon l'une quelconque des revendications 1 à 7, dans laquelle l'électrolyte liquide ou solide contient au moins un sel de lithium choisi parmi un groupe consistant en LiPF₆, LiBF₄, LiCF₃SO₃, LiN(CF₃SO₂)₂ et LiC(CF₃SO₂)₃.

9. Pile secondaire au lithium selon l'une quelconque des revendications 1 à 8, dans laquelle l'électrolyte liquide ou solide comprend un solvant organique ayant au moins un substituant comprenant du fluor.

10. Matériau actif de cathode à utiliser dans une pile secondaire au lithium, comprenant le dioxyde de nickel lithié contenant de l'aluminium, qui consiste essentiellement en Li, Ni, Al et O, et pouvant être obtenu de sorte que le rapport molaire x de l'aluminium à la somme de l'aluminium et du nickel se situe dans l'intervalle allant de 0,12 ≤ x < 0,15 et par les étapes de dispersion d'un composé du nickel dans une solution aqueuse, comprenant un composé de l'aluminium et un composé du lithium soluble dans l'eau, l'évaporation de la teneur en eau de la solution résultante pour obtenir un mélange, et la cuisson du mélange résultant dans une atmosphère contenant de l'oxygène, où ledit aluminium se substitue partiellement dans lessites du nickel de la structure cristalline du dioxyde de nickel lithié.

11. Matériau actif de cathode à utiliser dans une pile secondaire au lithium, comprenant le dioxyde de nickel lithié contenant de l'aluminium, qui consiste essentiellement en Li, Ni, Al et O, et pouvant être obtenu de sorte que le rapport molaire x de l'aluminium à la somme de l'aluminium et du nickel se situe dans l'intervalle allant de 0,12 ≤ x < 0,15 et par les étapes de mélange à sec d'un composé de l'aluminium, d'hydroxyde de lithium et d'un composé du nickel, et de cuisson du mélange résultant dans une atmosphère contenant de l'oxygène, où ledit aluminium se substitue partiellement dans les sites du nickel de la structure cristalline du dioxyde de nickel lithié.
